# EUROPEAN PATENT APPLICATION

(11) **EP 3 223 455 A1**
(43) Date of publication of application: **27.09.2017**
(21) Application number: 15871657.1
(22) Date of filing: 01.07.2015
(51) Int. Cl.: H04L 12/24

(54) **METHOD FOR CONFIGURING AND IMPLEMENTING OPERATIONS, ADMINISTRATION AND MAINTENANCE FUNCTION, AND FORWARDING DEVICE**

(30) Priority: 23.12.2014 CN 201410812061
(71) Applicant: ZTE Corporation, Shenzhen, Guangdong 518057 (CN)
(72) Inventor: SUN, Desheng, Shenzhen Guangdong 518057 (CN); ZHAO, Fuchuan, Shenzhen Guangdong 518057 (CN)
(74) Representative: Awapatent AB
(86) International application number: PCT/CN2015/083093
(87) International publication number: WO 2016/101582

(57) **Abstract**

Methods for configuring and implementing an operation, administration and maintenance (OAM) function and a forwarder are provided. A controller initiates a configuration of the OAM function of a forwarding path and constructs an OAM configuration message, the OAM configuration message carries OAM configuration information; and the controller sends the OAM configuration message to a head endpoint forwarder and/or a tail endpoint forwarder of the forwarding path through an Openflow channel. The forwarder at one end of the forwarding path receives an Openflow message through the Openflow channel and analyzes an Openflow protocol header therein; and if it is determined that the Openflow message is an OAM configuration message according to an analysis result, the forwarder analyzes the OAM configuration message, acquires OAM configuration information therein and implements corresponding processing.

## Description

### Technical Field

This article relates to an operation, administration and maintenance (OAM) function, and more particularly to a method of implementing the operation and administration and maintenance function and a corresponding forwarder.

### Background

Software defined network (SDN) is a research hotspot in the field of communication in recent years. The Open networking forum (ONF) has proposed SDN-related standards, which place emphasis on decoupling between a controller (CP) and a forwarder to regulate an interface between the controller and a forwarding plane and facilitate joint networking between controllers and forwarders of different manufacturers.

The ONF has now released an interface specification, Openflow Switch Specification, between the controller and the forwarding plane, a protocol implemented based on the interface specification is an Openflow protocol. The ONF has organized a number of interoperability tests in recent years, and is relatively mature in the support for two-layer services and two-layer VPN services.

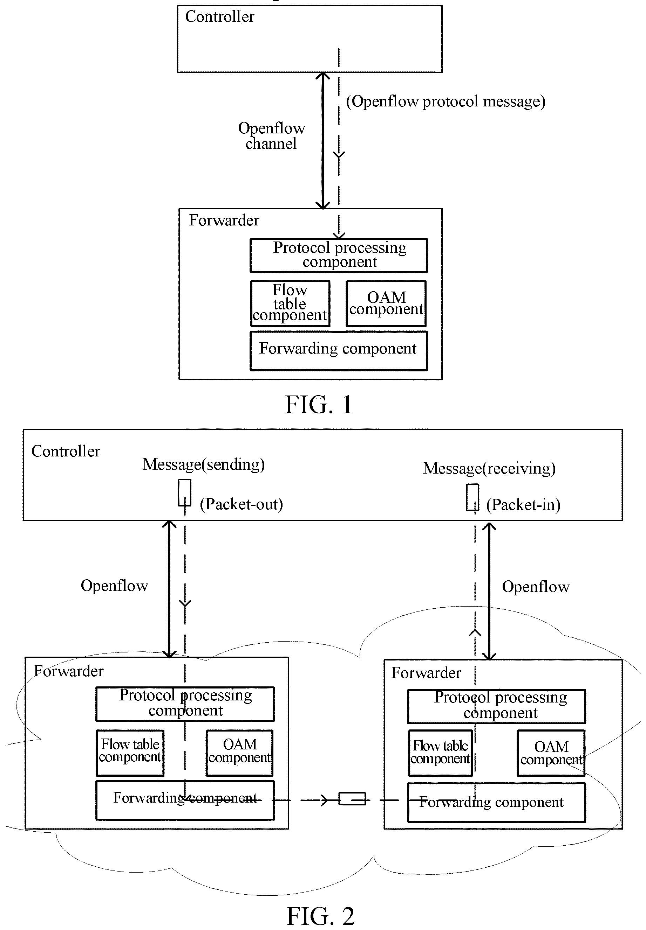

As shown in FIG. 1, an Openflow channel is used for Openflow protocol interaction between a controller and a forwarder (hereinafter also referred to as switch). After a protocol message sent by the controller is forwarded to the forwarder, a protocol processing component of the forwarder terminates a protocol and extracts content information carried by a protocol message and forwards it to a corresponding component. Likewise, information sent to the controller by the related component in the forwarder needs to be transmitted firstly to the protocol processing component to be encapsulated as an Openflow protocol message and sent to the controller.

The Openflow protocol defines a series of messages, including three categories: controller-to-switch, asynchronous and symmetric, multiple types are defined for each category. The controller-to-switch message is initiated by the controller to manage or acquire a state of the forwarder; the asynchronous message is initiated by the forwarder to notify the controller of a network event or a change in the state of the forwarder; and the symmetric message can be initiated by the forwarder or controller.

In the support for the OAM function, the controller sends a packet-out message in the controller-to-switch category to the forwarder through the Openflow channel. The forwarder sends the message according to a port specified by the message. After receiving the message, the forwarder at the receiving end completes the related work (such as received and sent packets counting, erroneous packets counting, etc.) according to message indication and sends it to a protocol processing component to be encapsulated into a Packet-in message to be sent to the controller via the Openflow channel, as shown in Figure 2. Thus, the controller completes a detection function of specified paths between forwarders through Packet-out and Packet-in messages. However, such mechanism is suited to be initiated by a user, and is suitable for a scene detected as require with low real-time requirements, is not suitable for periodic fast sending and receiving, and used for protecting messages of switching or other purposes, for example, MPLS-TP (packet transfer technology standard of international standard specification such as International Telecommunication Union-Telecommunication Sector (ITU-T)) standard is required to support fast CCM (connectivity detection message) received and sent in 3.33 milliseconds periodically. Such fast message usually needs to be received and sent fast at the forwarder device level.

### Summary

How to configure OAM on the basis of the existing standard interface of the OpenFlow Switch Specification to implement sending and receiving of OAM messages at the forwarder device level according to requirements of the standard is a technical problem needed to be solved.

A method for configuring an operation, administration and maintenance (OAM) function includes:
a controller initiating a configuration of an OAM function of a forwarding path and constructing an OAM configuration message, herein the OAM configuration message carries OAM configuration information; and
the controller sending the OAM configuration message to a head endpoint forwarder and/or a tail endpoint forwarder of the forwarding path through an Openflow channel.

In an exemplary embodiment, a message type carried by an Openflow protocol header in the OAM configuration message is a new message type obtained by extending message types defined by an Openflow protocol.

In an exemplary embodiment, the OAM configuration information includes all or part of the following information:
an OAM identifier indicating an identifier of an OAM instance configured;
an operation type indicating a type of an operation to be implemented;
a local port indicating a port bound with an OAM instance on a forwarder; and
a message transmission period indicating a period for sending OAM messages by the forwarder.

In an exemplary embodiment, the local port is a physical port or a logical port, including:
an ingress port representing a port through which OAM messages are received; and/or
an egress port representing a port through which OAM messages are sent.

In an exemplary embodiment, the forwarding path is a bidirectional forwarding path, and the controller constructing the OAM configuration message includes:
constructing a first OAM configuration message which is to be sent to a head endpoint forwarder of the bidirectional forwarding path, herein the first OAM configuration message carries information of a local port on the head endpoint forwarder, including ingress port information represented by flow table entry information and egress port information represented by group table information; and
constructing a second OAM configuration message which is to be sent to a tail endpoint forwarder of the bidirectional forwarding path, herein the second OAM configuration message carries information of a local port on the tail endpoint forwarder, including ingress port information represented by flow table entry information and egress port information represented by group table information.

In an exemplary embodiment, the forwarding path is a unidirectional forwarding path, and the controller constructing the OAM configuration message includes:
constructing a first OAM configuration message which is to be sent to a head endpoint forwarder of the unidirectional forwarding path, herein the first OAM configuration message carries information of a local port on the head endpoint forwarder, including egress port information represented by group table information; and
constructing a second OAM configuration message which is to be sent to a tail endpoint forwarder of the unidirectional forwarding path, herein the second OAM configuration message carries information of a local port on the tail endpoint forwarder, including ingress port information represented by flow table entry information.

In an exemplary embodiment, the operation type is one of the following: addition, modification, start, pause and deletion.

In an exemplary embodiment, a network protocol layer where the forwarding path is located is one of the following network protocol layers:
a physical layer, VLAN layer, IP layer and service layer of an Ethernet;
a tunnel layer, pseudo-wire layer and service layer of a multi-protocol label switching (MPLS) network or multi-protocol label switching-transport profile (MPLS-TP) network;
a physical layer, section layer and Optical Channel Data Unit-k (ODUk) layer of an optical transport network (OTN); and
a physical layer, optical transmission section layer, optical multiplex section layer, optical channel layer and optical regeneration section layer of a wavelength division multiplexing (WDM) network.

A method for implementing an operation, administration and maintenance (OAM) function includes:
a forwarder at one end of a forwarding path receiving an Openflow message through an Openflow channel and analyzing an Openflow protocol header in the Openflow message; and
when the forwarder determines that the Openflow message is an OAM configuration message according to an analysis result, the forwarder analyzing the OAM configuration message, acquiring OAM configuration information in the OAM configuration message and implementing corresponding processing.

In an exemplary embodiment, the forwarder analyzing the Openflow protocol header and determining that the Openflow message is an OAM configuration message includes:
the forwarder analyzing the Openflow protocol header, and determining that the Openflow message is an OAM configuration message when it is determined that a message type carried in the Openflow protocol header is a message type of the OAM configuration message, herein the message type of the OAM configuration message is a new message type acquired by extending message types defined by an Openflow protocol.

In an exemplary embodiment, the OAM configuration information acquired by the forwarder includes all or part of the following information:
an OAM identifier indicating an identifier of an OAM instance configured;
an operation type indicating a type of an operation to be implemented;
a local port indicating a port bound with an OAM instance on a forwarder; and
a message transmission period indicating a period for sending OAM messages by the forwarder.

In an exemplary embodiment, the OAM configuration information acquired by the forwarder includes information of a local port, the local port is a physical port or a logical port, including:
an ingress port representing a port through which OAM messages are received; and/or
an egress port representing a port through which OAM messages are sent.

In an exemplary embodiment, the forwarding path is a bidirectional forwarding path;
the information of a local port acquired by the forwarder includes ingress port information represented by flow table entry information and egress port information represented by group table information; and
the forwarder implements corresponding processing, including: finding a local ingress port in matching according to the flow table entry information, and finding a local egress port in matching according to the group table information.

In an exemplary embodiment, the forwarding path is a unidirectional forwarding path;
the information of a local port acquired by the forwarder includes ingress port information represented by flow table entry information or egress port information represented by group table information; and
the forwarder implementing corresponding processing, including: finding the local ingress port in matching according to the flow table entry information, or finding a local egress port in matching according to the group table information.

In an exemplary embodiment, the operation type acquired by the forwarder is addition; the forwarder implements corresponding processing, including: creating an OAM instance having the OAM identifier and binding with a specified ingress port and/or egress port, receiving OAM messages at the ingress port and/or sending OAM messages at the egress port according to the message transmission period; or
the operation type acquired by the forwarder is modification; the forwarder implements corresponding processing, including: finding an OAM instance to be configured according to the OAM identifier, updating a configuration of the OAM instance according to the received OAM configuration information, and sending and/or receiving OAM messages according to a new configuration; or
the operation type acquired by the forwarder is deletion; the forwarder implements corresponding processing, including: finding an OAM instance to be configured according to the OAM identifier, and deleting the OAM instance; or
the operation type acquired by the forwarder is pause; the forwarder performs corresponding processing, including: finding an OAM instance to be configured according to the OAM identifier, and stopping sending and/or receiving of OAM messages; or
the operation type acquired by the forwarder is restarting; the forwarder implements corresponding processing, including: finding an OAM instance to be configured according to the OAM identifier, and restarting sending and/or receiving of OAM messages.

In an exemplary embodiment, a network protocol layer where the forwarding path is located is one of the following network protocol layers:
a physical layer, VLAN layer, IP layer and service layer of an Ethernet;
a tunnel layer, pseudo-wire layer and service layer of a multi-protocol label switching (MPLS) network or multi-protocol label switching-transport profile (MPLS-TP) network;
a physical layer, section layer and Optical Channel Data Unit-k (ODUk) layer of an optical transport network (OTN); and
a physical layer, optical transmission section layer, optical multiplex section layer, optical channel layer, and optical regeneration section layer of a wavelength division multiplexing (WDM) network.

A controller for configuring an operation, administration and maintenance (OAM) function of a forwarding path includes:
a message construction module configured to construct an OAM configuration message when initiating a configuration of an OAM function of a forwarding path, herein the OAM configuration message carries OAM configuration information; and
a message sending module configured to send the OAM configuration message to a head endpoint forwarder and/or a tail endpoint forwarder of the forwarding path through an Openflow channel.

In an exemplary embodiment, a message type carried by an Openflow protocol header in the OAM configuration message constructed by the message construction module is a new message type obtained by extending message types defined by an Openflow protocol.

In an exemplary embodiment, the OAM configuration information carried in the OAM configuration message constructed by the message construction module includes all or part of the following information:
an OAM identifier indicating an identifier of an OAM instance configured;
an operation type indicating a type of an operation to be implemented;
a local port indicating a port bound with the OAM instance on a forwarder; and
a message transmission period indicating a period for sending OAM messages by the forwarder.

In an exemplary embodiment, the local port carried in the OAM configuration message constructed by the message construction module is a physical port or a logical port, including:
an ingress port representing a port through which OAM messages are received; and/or
an egress port representing a port through which OAM messages are sent.

In an exemplary embodiment, the forwarding path is a bidirectional forwarding path, and the message construction module is configured to:
construct a first OAM configuration message which is to be sent to a head endpoint forwarder of the bidirectional forwarding path, herein the first OAM configuration message carries information of a local port on the head endpoint forwarder, including ingress port information represented by flow table entry information and egress port information represented by group table information; and
construct a second OAM configuration message which is to be sent to a tail endpoint forwarder of the bidirectional forwarding path, herein the second OAM configuration message carries information of a local port on the tail endpoint forwarder, including ingress port information represented by flow table entry information and egress port information represented by group table information.

In an exemplary embodiment, the forwarding path is a unidirectional forwarding path, and the message construction module is configured to:
construct a first OAM configuration message which is to be sent to a head endpoint forwarder of the unidirectional forwarding path, herein the first OAM configuration message carries information of a local port on the head endpoint forwarder, including egress port information represented by group table information; and
construct a second OAM configuration message which is to be sent to a tail endpoint forwarder of the unidirectional forwarding path, herein the second OAM configuration message carries information of a local port on the tail endpoint forwarder, including ingress port information represented by flow table entry information.

In an exemplary embodiment, the operation type in the OAM configuration information carried in the OAM configuration message constructed by the message construction module is one of the following: addition, modification, start, pause and deletion

In an exemplary embodiment, the message construction module constructs the OAM configuration message when initiating the configuration of the OAM function of the forwarding path, herein a network protocol layer where the forwarding path is located is one of the following network protocol layers:
a physical layer, VLAN layer, IP layer and service layer of an Ethernet;
a tunnel layer, pseudo-wire layer and service layer of a multi-protocol label switching (MPLS) network or multi-protocol label switching-transport profile (MPLS-TP) network;
a physical layer, section layer and Optical Channel Data Unit-k (ODUk) layer of an optical transport network (OTN); and
a physical layer, optical transmission section layer, optical multiplex section layer, optical channel layer and optical regeneration section layer of a wavelength division multiplexing (WDM) network.

A forwarder for implementing an operation, administration and maintenance (OAM) function of a forwarding path includes:
an Openflow protocol processing component configured to receive an Openflow message sent by a controller through an Openflow channel, analyze an Openflow protocol header in the Openflow message, and when determining that the Openflow message is an OAM configuration message, forward the Openflow message to an OAM component for processing; and
the OAM component configured to analyze the OAM configuration message, acquire OAM configuration information in the OAM configuration message and implement corresponding processing.

In an exemplary embodiment, the Openflow protocol processing component is configured to analyze the Openflow protocol header, and determine that the Openflow message is an OAM configuration message when it is determined that a message type carried in the Openflow protocol header is a message type of the OAM configuration message, herein the message type of the OAM configuration message is a new message type obtained by extending message types defined by an Openflow protocol.

In an exemplary embodiment, the OAM configuration information acquired by the OAM component includes all or part of the following information:
an OAM identifier indicating an identifier of an OAM instance to be configured;
an operation type indicating a type of an operation to be implemented;
a local port indicating a port bound with an OAM instance on a forwarder; and
a message transmission period indicating a period for sending OAM messages by the forwarder.

In an exemplary embodiment, the OAM configuration information acquired by the OAM component includes information of a local port, the local port is a physical port or a logical port, including:
an ingress port representing a port through which OAM messages are received; and/or
an egress port representing a port through which OAM messages are sent.

In an exemplary embodiment, the information of a local port in the OAM configuration information acquired by the OAM component includes ingress port information represented by flow table entry information and egress port information represented by group table information; and
the OAM component implements corresponding processing, including: finding a local ingress port in matching according to the flow table entry information, and finding a local egress port in matching according to the group table information.

In an exemplary embodiment, the information of a local port in the OAM configuration information acquired by the OAM component includes ingress port information represented by flow table entry information or egress port information represented by group table information; and
the OAM component implements corresponding processing, including: finding a local ingress port in matching according to the flow table entry information, or finding a local egress port in matching according to the group table information.

In an exemplary embodiment, the operation type acquired by the OAM component is addition; the OAM component is configured to create an OAM instance having the OAM identifier and binding with a specified ingress port and/or egress port, receive OAM messages at the ingress port and/or sending the OAM messages at the egress port according to the message transmission period; or
the operation type acquired by the OAM component is modification; the OAM component is configured to find an OAM instance to be configured according to the OAM identifier, update a corresponding configuration of the OAM instance according to received OAM configuration information, and send and/or receive the OAM messages according to a new configuration; or
the operation type acquired by the OAM component is deletion; the OAM component is configured to find an OAM instance to be configured according to the OAM identifier, and delete the OAM instance; or
the operation type acquired by the OAM component is pause; the OAM component is configured to find an OAM instance to be configured according to the OAM identifier, and stop sending and/or receiving of OAM messages; or
the operation type acquired by the OAM component is restart; the OAM component is configured to find an OAM instance to be configured according to the OAM identifier, and restart sending and/or receiving of OAM messages.

In an exemplary embodiment, a network protocol layer where the forwarding path associated with the forwarder is located is one of the following network protocol layers:
a physical layer, VLAN layer, IP layer and service layer of an Ethernet;
a tunnel layer, pseudo-wire layer and service layer of a multi-protocol label switching (MPLS) network or multi-protocol label switching-transport profile (MPLS-TP) network;
a physical layer, section layer and Optical Channel Data Unit-k (ODUk) layer of an optical transport network (OTN); and
a physical layer, optical transmission section layer, optical multiplex section layer, optical channel layer and optical regeneration section layer of a wavelength division multiplexing (WDM) network.

A computer readable storage medium having computer-executable instructions stored therein used to execute the methods described above.

In the embodiments described above, the OAM is configured at the head and tail endpoint forwarders of the forwarding path through the OAM configuration message so as to implement receiving and sending of the OAM messages at the forwarder as required by standards. In addition, by extending the message types of the Openflow protocol header, the newly defined OAM message completes configuration function such as addition, modification, pause, start or deletion of the OAM function, and has the advantages of simplicity and reliability.

### Brief Description of Drawings

FIG. 1 is a simple schematic diagram of an SDN network.
FIG. 2 is a schematic diagram of receiving and sending of Packet-out and Packet-in messages in the SDN network.
FIG. 3 is a flow diagram of a method according to embodiment 1 of the present invention.
FIG. 4 is a block diagram of a controller according to embodiment 1 of the present invention.
FIG. 5 is a flow diagram of a method according to embodiment 2 of the present invention.
FIG. 6 is a block diagram of a forwarder according to embodiment 2 of the present invention.
FIG. 7 is a schematic diagram of configuring OAM of an bidirectional path according to an application example of the present invention.
FIG. 8 is a schematic diagram of configuring OAM of a unidirectional path according to an application example of the present invention.
FIG. 9 is a schematic diagram of configuring OAM of only one endpoint forwarder of a bidirectional path according to an application example of the present invention.
FIG. 10 is a schematic diagram of configuring OAM of only a head endpoint forwarder of a unidirectional path according to an application example of the present invention.
FIG. 11 is a schematic diagram of configuring OAM of only a tail endpoint forwarder of a bidirectional path according to an application example of the present invention.

### Detailed Description

The embodiments of the present document will be described in detail below in conjunction with accompanying drawings.

### Embodiment One

The present embodiment extends message types of a protocol header based on the existing Openflow protocol, and implements OAM function configuration management of a bidirectional/unidirectional forwarding path through the newly defined OAM configuration message. A network protocol layer (also referred to as a layer network in some standards) in which the forwarding path (also referred to as a transmission path or transfer path in some standards) is located is one of the following network protocol layers:
a physical layer, VLAN layer, IP layer and service layer of an Ethernet;
a tunnel layer, pseudo-wire layer and service layer of a multi-protocol label switching (MPLS) network or multi-protocol label switching-transport profile (MPLS-TP) network;
a physical layer, section layer and Optical Channel Data Unit-k (ODUk) layer of an optical transport network (OTN); and
a physical layer, optical transmission section layer, optical multiplex section layer, optical channel layer and optical regeneration section layer of a wavelength division multiplexing (WDM) network.

The protocol layers described above are not exhaustive, and can also be various protocol layers of a provider backbone bridge (PBB) network, etc.

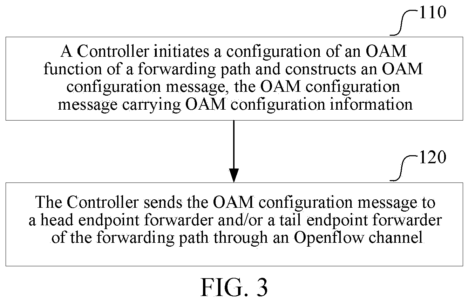

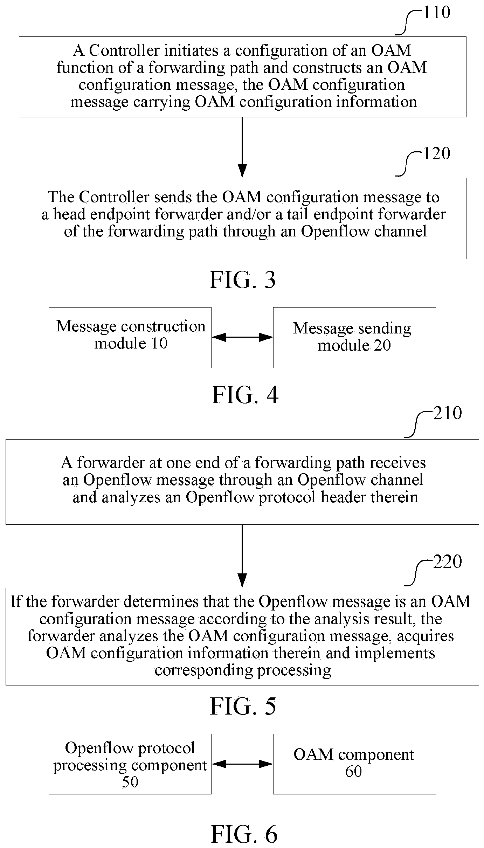

A method for configuring an operation, administration and maintenance function according to the embodiment is shown in FIG. 3, and includes the following steps.

In step 110, a controller initiates a configuration of an OAM function of a forwarding path and constructs an OAM configuration message, the OAM configuration message carrying OAM configuration information.

A message type carried by an Openflow protocol header in the OAM configuration message is a new message type acquired by extending message types defined by an Openflow protocol.

The OAM configuration information includes all or part of the following information:
an OAM identifier indicating an identifier of an OAM instance to be configured;
an operation type indicating a type of an operation to be implemented;
a local port indicating a port bound with an OAM instance on a forwarder; and
a message transmission period indicating a period for sending OAM messages by the forwarder.

The operation type may be one of addition, modification, start, pause and deletion.

The local port is a physical port (such as a physical port of the Ethernet, OTN or WDM, etc.) or a logical port (such as a VLAN port of the Ethernet, a tunnel or pseudo-wire port of the MPLS or MPLS_TP, an ODUk channel port of the OTN, etc.), including: an ingress port representing a port through which OAM messages are received; and/or an egress port representing a port through which OAM messages are sent. When the forwarding path is a bidirectional forwarding path, the local port in the OAM configuration message can include the ingress port and the egress port. However, when the OAM messages (such as OAM detection messages) are only sent on the port, it can include only the ingress port, and when the OAM messages are only received on the port, it can include only the egress port.

In this step, when the forwarding path is a bidirectional forwarding path, the controller constructing the OAM configuration message includes:
constructing a first OAM configuration message which is to be sent to a head endpoint forwarder of the bidirectional forwarding path, herein the first OAM configuration message carries information of a local port on the head endpoint forwarder, including ingress port information represented by flow table entry information (such as a table id or a key of a flow table) and egress port information represented by group table information (such as a group id of a group table); and
constructing a second OAM configuration message which is to be sent to a tail endpoint forwarder of the bidirectional forwarding path, herein the second OAM configuration message carries information of a local port on the tail endpoint forwarder, including ingress port information represented by flow table entry information and egress port information represented by group table information.

In this step, when the forwarding path is a unidirectional forwarding path, the controller constructing the OAM configuration message includes:
constructing a first OAM configuration message which is to be sent to a head endpoint forwarder of the unidirectional forwarding path, herein the first OAM configuration message carries information of a local port on the head endpoint forwarder, including egress port information represented by group table information; and
constructing a second OAM configuration message which is to be sent to a tail endpoint forwarder of the unidirectional forwarding path, herein the second OAM configuration message carries information of a local port on the tail endpoint forwarder, including ingress port information represented by flow table entry information.

For example, the local port can be represented by the key of the Openflow flow table, and the forwarder can find the corresponding physical port or logical port by matching the flow table with the key.

In step 120, the controller sends the OAM configuration message to a head endpoint forwarder and/or a tail endpoint forwarder of the forwarding path through an Openflow channel.

In this step, the controller sends the constructed first OAM configuration message to the head endpoint forwarder, and sends the constructed second OAM configuration message to the tail endpoint forwarder.

In the embodiment, although two OAM configuration messages are constructed and sent to the forwarders at the head port and tail port, in a particular application scenario (which will be mentioned below), the controller can construct only one OAM configuration message and send it to a forwarder on the head port or tail port.

Accordingly, a controller for configuring an operation, administration and maintenance (OAM) function of a forwarding path according to the present embodiment is shown in FIG. 4 and includes a message construction module 10 and a message sending module 20.

The message construction module 10 is configured to construct an OAM configuration message when initiating a configuration of an OAM function of a forwarding path, the OAM configuration message carries OAM configuration information.

The message sending module 20 is configured to send the OAM configuration message to a head endpoint forwarder and/or a tail endpoint forwarder of the forwarding path through an Openflow channel.

In the embodiment, a message type carried by an Openflow protocol header in the OAM configuration message constructed by the message construction module is a new message type obtained by extending message types defined by an Openflow protocol.

In the embodiment, the OAM configuration information carried in the OAM configuration message constructed by the message construction module includes all or part of the following information:
an OAM identifier indicating an identifier of an OAM instance configured;
an operation type indicating a type of an operation to be implemented;
a local port indicating a port to be bound with the OAM instance on a forwarder; and
a message transmission period indicating a period for sending OAM messages by the forwarder.

In the embodiment, the OAM configuration information carried in the OAM configuration message constructed by the message construction module further includes a receiving and sending indication indicating that on the local port the OAM messages are sent or the OAM messages are received or the OAM messages are sent and received simultaneously.

In the embodiment, the operation type in the OAM configuration information carried in the OAM configuration message constructed by the message construction module may be one of the following: addition, modification, start, pause and deletion.

In the embodiment, the information of a local port in the OAM configuration information carried in the OAM configuration message constructed by the message construction module is represented by characteristic information generated by the controller, there is a corresponding relationship between the characteristic information and the local port on the head endpoint forwarder and/or the tail endpoint forwarder, and the local port is a physical port or a logical port.

In the embodiment, the message construction module constructs the OAM configuration message, including: constructing a first OAM configuration message for the head endpoint forwarder and constructing a second OAM configuration message for the tail endpoint forwarder; and the message sending module sends the OAM configuration message to the head endpoint forwarder and/or the tail endpoint forwarder of the forwarding path through the Openflow channel, including: sending the first OAM configuration message to the head endpoint forwarder and sending the second OAM configuration message to the tail endpoint forwarder.

In the embodiment, the message construction module constructs the OAM configuration message when initiating the configuration of the OAM function of the forwarding path, herein a network protocol layer in which the forwarding path is located is one of the following network protocol layers:
a physical layer, VLAN layer, IP layer and service layer of an Ethernet;
a tunnel layer, pseudo-wire layer and service layer of a multi-protocol label switching (MPLS) network or multi-protocol label switching-transport profile (MPLS-TP) network;
a physical layer, section layer and ODUk layer of an optical transport network (OTN); and
a physical layer, optical transmission section layer, optical multiplex section layer, optical channel layer and optical regeneration section layer of a wavelength division multiplexing (WDM) network.

### Embodiment two

The present embodiment relates to how to implement an OAM function when a forwarder at one end of a forwarding path receives an OAM configuration message, and a network protocol layer in which the forwarding path is located is one of the following network protocol layers:
a physical layer, VLAN layer, IP layer and service layer of an Ethernet;
a tunnel layer, pseudo-wire layer and service layer of a multi-protocol label switching (MPLS) network or multi-protocol label switching-transport profile (MPLS-TP) network;
a physical layer, section layer and ODUk layer of an optical transport network (OTN); and
a physical layer, optical transmission section layer, optical multiplex section layer, optical channel layer and optical regeneration section layer of a wavelength division multiplexing (WDM) network.

The protocol layers described above are not exhaustive, and can also be various protocol layers of a provider backbone bridge (PBB) network, etc.

As shown in FIG. 5, a method for implementing an OAM function according to the embodiment includes the following steps.

In Step 210, a forwarder at one end of a forwarding path receives an Openflow message through an Openflow channel and analyzes an Openflow protocol header therein.

In Step 220, if the forwarder determines that the Openflow message is an OAM configuration message according to the analysis result, the forwarder analyzes the OAM configuration message, acquires OAM configuration information therein and implements corresponding processing.

In the present embodiment, the forwarder analyzes the Openflow protocol header and determines that the Openflow message is the OAM configuration message, including: the forwarder analyzes the Openflow protocol header, and determines that the Openflow message is the OAM configuration message if it is determined that a message type carried therein is a message type of the OAM configuration message, herein the message type of the OAM configuration message is a new message type obtained by extending message types defined by an Openflow protocol.

The acquired OAM configuration information includes all or part of the following information:
an OAM identifier indicating an identifier of an OAM instance to be configured;
an operation type indicating a type of an operation to be implemented;
a local port indicating a port to be bound with an OAM instance on a forwarder; and
a message transmission period indicating a period for sending OAM messages by the forwarder.

In this step, the OAM configuration information acquired by the forwarder includes information of a local port, and the local port is a physical port or a logical port, including: an ingress port representing a port through which OAM messages are received; and/or an egress port representing a port through which OAM messages are sent.

In one example, the forwarding path is a bidirectional forwarding path.

The information of a local port acquired by the forwarder includes ingress port information represented by flow table entry information and egress port information represented by group table information.

The forwarder implements corresponding processing, including: finding the local ingress port in matching according to the flow table entry information, and finding the local egress port in matching according to the group table information.

In one example, the forwarding path is a unidirectional forwarding path.

The information of a local port acquired by the forwarder includes ingress port information represented by flow table entry information or egress port information represented by group table information.

The forwarder implements corresponding processing, including: finding the local ingress port in matching according to the flow table entry information, or finding the local egress port in matching according to the group table information.

In this step, the information of a local port is represented by characteristic information generated by the controller; and the forwarder performs corresponding processing, including: finding a corresponding local port based on the characteristic information, binding the OAM instance with the found local port, the local port being a physical port or a logical port.

In this step, depending on the acquired operation type, the following processing can be implemented:
the operation type acquired by the forwarder is addition; the forwarder implements corresponding processing, including: creating an OAM instance having the OAM identifier and binding with a specified ingress port and/or egress port, receiving the OAM messages at the ingress port and/or sending the OAM messages at the egress port according to the message transmission period; or
the operation type acquired by the forwarder is modification; the forwarder implements corresponding processing, including: finding an OAM instance to be configured according to the OAM identifier, updating the configuration of the OAM instance according to the received OAM configuration information, and sending and/or receiving the OAM messages according to the new configuration; or
the operation type acquired by the forwarder is deletion; the forwarder implements corresponding processing, including: finding an OAM instance to be configured according to the OAM identifier, and deleting the OAM instance; or
the operation type acquired by the forwarder is pause; the forwarder implements corresponding processing, including: finding an OAM instance to be configured according to the OAM identifier, and stopping sending and/or receiving of the OAM messages; or
the operation type acquired by the forwarder is restarting; the forwarder implements corresponding processing, including: finding an OAM instance to be configured according to the OAM identifier, and restarting sending and/or receiving of the OAM messages.

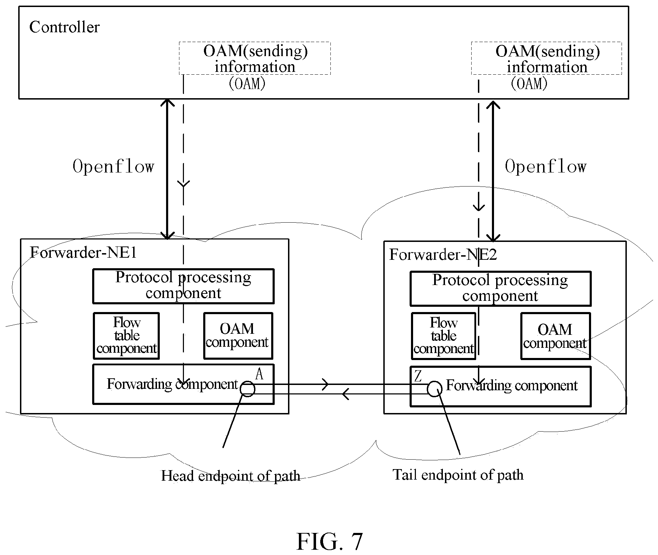

Accordingly, a forwarder for implementing an operation, administration and maintenance (OAM) function of a forwarding path can be realized according to the present embodiment, the forwarder is a forwarder at one end of a forwarding path as shown in FIG. 6 (see also FIG. 7) and includes an Openflow protocol processing component 50 and an OAM component 60.

The Openflow protocol processing component 50 is configured to receive an Openflow message sent by a controller through an Openflow channel, analyze an Openflow protocol header therein, and if the Openflow message is determined to be an OAM configuration message, forward the Openflow message to an OAM component for processing

The OAM component 60 is configured to analyze the OAM configuration message, acquire OAM configuration information therein and implement corresponding processing.

In the embodiment, the Openflow protocol processing component analyzes the Openflow protocol header, and determines that the Openflow message is the OAM configuration message if it is determined that a message type carried therein is a message type of the OAM configuration message, herein the message type of the OAM configuration message is a new message type obtained by extending message types defined by an Openflow protocol.

In the embodiment, the OAM configuration information acquired by the OAM component includes all or part of the following information:
an OAM identifier indicating an identifier of an OAM instance to be configured;
an operation type indicating a type of an operation to be implemented;
a local port indicating a port to be bound with an OAM instance on a forwarder; and
a message transmission period indicating a period for sending OAM messages by the forwarder.

In the embodiment, the OAM configuration information acquired by the OAM component includes information of a local port, herein the local port is a physical port or a logical port, including:
an ingress port representing a port through which OAM messages are received; and/or
an egress port representing a port through which OAM messages are sent.

In the embodiment, the information of a local port in the OAM configuration information acquired by the OAM component includes ingress port information represented by flow table entry information and egress port information represented by group table information.

The OAM component implements corresponding processing, including: finding the local ingress port in matching according to the flow table entry information, and finding the local egress port in matching according to the group table information.

In the embodiment, the information of a local port in the OAM configuration information acquired by the OAM component includes ingress port information represented by flow table entry information, or egress port information represented by group table information.

The OAM component implements corresponding processing, including: finding the local ingress port in matching according to the flow table entry information, or finding the local egress port in matching according to the group table information.

In the embodiment, the operation type acquired by the OAM component is addition; the OAM component implements corresponding processing, including: creating an OAM instance having the OAM identifier and binding with a specified ingress port and/or egress port, receiving the OAM messages at the ingress port and/or sending the OAM messages at the egress port according to the message transmission period; or
the operation type acquired by the OAM component is modification; the OAM component implements corresponding processing, including: finding an OAM instance to be configured according to the OAM identifier, updating the corresponding configuration of the OAM instance according to the received OAM configuration information, and sending and/or receiving the OAM messages according to the new configuration; or
the operation type acquired by the OAM component is deletion; the OAM component implements corresponding processing, including: finding an OAM instance to be configured according to the OAM identifier, and deleting the OAM instance; or
the operation type acquired by the OAM component is pause; the OAM component implements corresponding processing, including: finding an OAM instance to be configured according to the OAM identifier, and stopping sending and/or receiving of the OAM messages; or
the operation type acquired by the OAM component is restarting; the OAM component implements corresponding processing, including: finding an OAM instance to be configured according to the OAM identifier, and restarting sending and/or receiving of the OAM messages.

In the embodiment, a network protocol layer in which the forwarding path associated with the forwarder is located is one of the following network protocol layers:
a physical layer, VLAN layer, IP layer and service layer of an Ethernet;
a tunnel layer, pseudo-wire layer and service layer of a multi-protocol label switching (MPLS) network or multi-protocol label switching-transport profile (MPLS-TP) network;
a physical layer, section layer and ODUk layer of an optical transport network (OTN); and
a physical layer, optical transmission section layer, optical multiplex section layer, optical channel layer and optical regeneration section layer of a wavelength division multiplexing (WDM) network.

It can be known from analysis for each of the embodiments described above that both the bidirectional path and the unidirectional path can complete the required OAM function.

Further description will be made with several application examples in conjunction with FIGs. 7-11.

### Application example 1

In this example, by way of example, a controller initiates a fast OAM function of newly adding a bidirectional path A-Z (that is, from a port A of a Forwarder NE1 to a port Z of a Forwarder NE2, NE1 and NE2 are exemplary device names of Forwarder) with a transmission period of 10 milliseconds, and the implementation scheme of the example will be described below.

The implementation scheme includes the following steps.

In step 1, the controller initiates a configuration of a fast OAM of newly adding bidirectional path A-Z, constructs a first OAM configuration message and a second OAM configuration message, and sends the two OAM configuration messages to the Forwarder NE1 and the Forwarder NE2 through an Openflow channel, respectively.

Generic members of an Openflow protocol header are shown in the following table:

| | |
|---|---|
| Version | Openflow protocol version number |
| Type | Openflow protocol message type |
| Length | Length of Openflow protocol message (including Openflow protocol header) |

Both the first OAM configuration message and the second OAM configuration message are Openflow messages. By extending the message type carried by the Openflow protocol header (represented by a value of the type member), 240 is selected from the unused values of the type member as the message type of an OAM configuration message. This way is used to identify OAM configuration messages in other examples and will not be repeated hereinafter.

OAM configuration information (which can be carried in the generic member) in the OAM configuration message is shown in the following table:

| | |
|---|---|
| Header | Openflow protocol header |
| Id | OAM identifier |
| LocalPort | Local port bound with OAM |
| Data | Message content |

In this example, a value of ID is 1, indicating that the OAM identifier is 1; a value of action is 1, indicating that the operation type is addition; the message member localPort includes two values, where flow table entry information X identifies binding port A as an ingress port, and group table information Y identifies binding port A as an egress port, that is, OAM messages are sent and received on the same port. A data message (referring to a payload part) of the first OAM configuration message also carries the transmission period of the OAM message and other required information. The transmission period of the OAM message is set to 10 milliseconds. In the second OAM configuration message, the localPort includes two values, where flow table entry information X identifies binding port Z as an ingress port, and group table information Q identifies binding port Z as an egress port, and the carried other OAM configuration information is the same as the first OAM configuration message.

In step 2, an Openflow protocol processing component of the NE1 receives an Openflow message, analyzes the type member in the protocol header, determines that the Openflow message is an OAM configuration message according to the type value of 240, and forwards the Openflow message to an OAM component. An Openflow protocol processing component of the NE2 receives an Openflow message, analyzes the type member in the protocol header, determines that the Openflow message is an OAM configuration message according to the type value of 240, and forwards the Openflow message to the OAM component.

In step 3, the OAM component of the NE1 analyzes the OAM configuration message, determines that the operation type is addition according to the value of the member action of 1; determines that both an ingress port and an egress port bound with an OAM instance are the port A according to values of the member localPort of X and Y; determines that the transmission period of the OAM message is 10 milliseconds according to data message analysis. An OAM instance (which can be regarded as part of the OAM component) with the OAM identifier being 1 is created, the required OAM messages are constructed, a 10-millisecond timer is started, the OAM messages are sent periodically from the port A, and OAM messages of the same type are detected and received from the port A (the messages are transmitted and received through a forwarding component). The OAM component of the NE2 analyzes the OAM configuration message, determines that the operation type is addition according to the value of the member action of 1; determines that both an ingress port and an egress port bound with an OAM instance are the port Z according to values of the member localPort of P and Q; determines that the transmission period of the OAM message is 10 milliseconds according to data message analysis. An OAM instance with the OAM identifier being 1 is created, the required OAM messages are constructed, a 10-millisecond timer is started, the OAM messages are sent periodically from the port Z, and the same type of OAM messages are detected and received from the port Z.

### Application example 2

In this example, by way of example, a controller initiates modifying the OAM transmission period of a bidirectional path A-Z (from a port A of a Forwarder NE1 to a port A of a Forwarder NE2) from 10 milliseconds to 3.33 milliseconds, and the implementation scheme of the example will be described below.

The implementation scheme includes the following steps.

In step 1, the controller initiates a configuration of a fast OAM of modifying a bidirectional path A-Z, constructs a first OAM configuration message, where a value of the message member id is 1, sets the message member action to be 2, and identifies the operation type as modification. The message member localPort includes two values, where flow table entry information X identifies binding the port A as an ingress port, and group table information Y identifies binding the port A as an egress port. The data message carries the message period of 3.33 milliseconds, and can carry other required information. The first OAM configuration message is sent to the NE1 through an Openflow channel. At the same time, the second OAM configuration message is constructed, and the message member localPort includes two values, where flow table entry information P identifies binding the port Z as an ingress port, and group table information Q identifies binding the port Z as an egress port. Other OAM configuration information is the same as the first OAM configuration message, and the second OAM configuration message is sent to the NE2 through the Openflow channel.

In step 2, an Openflow protocol processing component of the NE1 receives an Openflow message, analyzes the type member in the protocol header, determines that the Openflow message is an OAM configuration message according to the type value of 240, and forwards the Openflow message to an OAM component. An Openflow protocol processing component of the NE2 receives an Openflow message, analyzes the type member in the protocol header, determines that the Openflow message is an OAM configuration message according to the type value of 240, and forwards the Openflow message to the OAM component.

In step 3, the OAM component of the NE1 analyzes the structure of the OAM message, determines that the operation type is modification of the OAM according to the value of the member action of 2; determines that both an ingress port and an egress port bound with an OAM instance are the port A according to values of the member localPort of X and Y; determines that the transmission period of the OAM messages is 3.3 milliseconds according to data message analysis; finds a currently validated OAM instance according to the OAM identifier of 1, modifies the transmission period of the OAM messages, stops the 10-millisecond timer, starts the 3.33-millisecond timer, sends the OAM messages from the port A periodically according to the new transmission period, and detects and receives the same type of OAM messages from the port A. The OAM component of the NE2 analyzes the structure of the OAM message, determines that the operation type is modification of the OAM according to the value of the member action of 2; determines that both an ingress port and an egress port bound with an OAM instance are the port Z according to values of the member localPort of P and Q; determines that the transmission period of the OAM messages is 3.3 milliseconds according to data message analysis; finds a currently validated 10-millisecond instance according to the OAM identifier of 1, modifies the transmission period of the OAM message, stops the 10-millisecond timer, starts the 3.33-millisecond timer, sends the OAM messages from the port Z periodically according to the new transmission period, and detects and receives the same type of OAM messages from the port Z.

### Application example 3

In this example, by way of example, a controller initiates an OAM of pausing a bidirectional path A-Z (from a port A of a Forwarder NE1 to a port A of a Forwarder NE2), and the implementation scheme of the example will be described below.

The implementation scheme includes the following steps.

In step 1, the controller initiates a fast OAM of pausing a bidirectional path A-Z, constructs a first OAM configuration message, where the message member action is 3, the operation type is identified as pause, and values of other message members and the value of the transmission period of the OAM messages are the same as those of the first OAM configuration message of Example 2; and sends the first OAM configuration message to the NE1 through an Openflow channel. At the same time, the controller constructs a second OAM configuration message, where the message member action is 3, the operation type is identified as pause, and values of other message members and the value of the transmission period of the OAM messages are the same as those of the second OAM configuration message of Example 2; and sends the second OAM configuration message to the NE2 through the Openflow channel.

In step 2, an Openflow protocol processing component of the NE1 receives an Openflow message, analyzes the type member in the protocol header, determines that the Openflow message is an OAM configuration message according to the type value of 240, and forwards the Openflow message to an OAM component. An Openflow protocol processing component of the NE2 receives an Openflow message, analyzes the type member in the protocol header, determines that the Openflow message is an OAM configuration message according to the type value of 240, and forwards the Openflow message to the OAM component.

In step 3, the OAM component of the NE1 analyzes the structure of the OAM message, determines that the operation type is pause of the OAM according to the value of the member action of 3; determines that both an ingress port and an egress port bound with an OAM instance are the port A according to values of the member localPort of X and Y; determines that the transmission period of the OAM messages is 3.3 milliseconds according to data message analysis; finds a currently validated OAM instance according to the OAM identifier of 1, stops the 3.3-millisecond timer, and stops sending and receiving the OAM messages from the port A. The OAM component of the NE2 analyzes the structure of the OAM message, determines that the operation type is pause of the OAM according to the value of the member action of 3; determines that both an ingress port and an egress port bound with an OAM instance are the port Z according to values of the member localPort of P and Q; determines that the transmission period of the OAM messages is 3.3 milliseconds according to data message analysis; finds a currently validated OAM instance according to the OAM identifier of 1, stops the 3.3-millisecond timer, and stops sending and receiving the OAM messages from the port Z.

### Application example 4

In this example, by way of example, a controller initiates an OAM of starting the paused bidirectional path A-Z (from a port A of a Forwarder NE1 to a port A of a Forwarder NE2), and the implementation scheme of the example will be described below.

The implementation scheme includes the following steps.

In step 1, the controller initiates a fast OAM of starting the paused bidirectional path A-Z, constructs a first OAM configuration message, where the message member action is 4, the operation type is identified as restart, and values of other message members and the value of the transmission period of the OAM messages are the same as those of the first OAM configuration message of Example 2; and sends the first OAM configuration message to the NE1 through an Openflow channel. At the same time, the controller constructs a second OAM configuration message, where the message member action is 4, the operation type is identified as restart, and values of other message members and the value of the transmission period of the OAM messages are the same as those of the second OAM configuration message of Example 2; and sends the second OAM configuration message to the NE2 through the Openflow channel.

In step 2, an Openflow protocol processing component of the NE1 receives an Openflow message, analyzes the type member in the protocol header, determines that the Openflow message is an OAM configuration message according to the type value of 240, and forwards the Openflow message to an OAM component. An Openflow protocol processing component of the NE2 receives an Openflow message, analyzes the type member in the protocol header, determines that the Openflow message is an OAM configuration message according to the type value of 240, and forwards the Openflow message to the OAM component.

In step 3, the OAM component of the NE1 analyzes the structure of the OAM message, determines that the operation type is restart of the OAM according to the value of the member action of 4; determines that both an ingress port and an egress port bound with an OAM instance are the port A according to values of the member localPort of X and Y; determines that the transmission period of the OAM messages is 3.3 milliseconds according to data message analysis; finds a currently validated OAM instance according to the OAM identifier of 1, restarts the 3.3-millisecond timer, and begins to send and receive the OAM messages from the port A. The OAM component of the NE2 analyzes the structure of the OAM message, determines that the operation type is restart of the OAM according to the value of the member action of 4; determines that both an ingress port and an egress port bound with an OAM instance are the port Z according to values of the member localPort of P and Q; determines that the transmission period of the OAM messages is 3.3 milliseconds according to data message analysis; finds a currently validated OAM instance according to the OAM identifier of 1, restarts the 3.3-millisecond timer, and begins to send and receive the OAM messages from the port Z.

### Application example 5

In this example, by way of example, a controller initiates an OAM of deleting a bidirectional path A-Z (from a port A of a Forwarder NE1 to a port A of a Forwarder NE2), and the implementation scheme of the example will be described below.

The implementation scheme includes the following steps.

In step 1, the controller initiates a fast OAM of deleting the bidirectional path A-Z, constructs a first OAM configuration message, where the message member action is 5, the operation type is identified as deletion, and values of other message members and the value of the transmission period of the OAM messages are the same as those of the first OAM configuration message of Example 2; and sends the first OAM configuration message to the NE1 through an Openflow channel. At the same time, the controller constructs a second OAM configuration message, where the message member action is 5, the operation type is identified as deletion, and values of other message members and the value of the transmission period of the OAM messages are the same as those of the second OAM configuration message of Example 2; and sends the second OAM configuration message to the NE2 through the Openflow channel.

In step 2, an Openflow protocol processing component of the NE1 receives an Openflow message, analyzes the type member in the protocol header, determines that the Openflow message is an OAM configuration message according to the type value of 240, and forwards the Openflow message to an OAM component. An Openflow protocol processing component of the NE2 receives an Openflow message, analyzes the type member in the protocol header, determines that the Openflow message is an OAM configuration message according to the type value of 240, and forwards the Openflow message to the OAM component.

In step 3, the OAM component of the NE1 analyzes the structure of the OAM message, determines that the operation type is deletion of the OAM according to the value of the member action of 5; determines that the bound local port is the port A according to a value of the member localPort; determines that the transmission period of the OAM messages is 3.3 milliseconds according to data message analysis; finds a currently validated OAM instance according to the OAM identifier, deletes the OAM instance (and at the same time deletes the 3.33-millisecond timer), and cancels sending and receiving of the OAM messages at the port A. The OAM component of the NE2 analyzes the structure of the OAM message, determines that the operation type is deletion of the OAM according to the value of the member action of 5; determines that the bound local port is the port Z according to a value of the member localPort; determines that the transmission period of the OAM messages is 3.3 milliseconds according to data message analysis; finds a currently validated OAM instance according to the OAM identifier, deletes the OAM instance (and at the same time deletes the 3.33-millisecond timer), and cancels sending and receiving of the OAM messages at the port Z.

In step 3, the OAM component of the NE1 analyzes the structure of the OAM message, determines that the operation type is deletion of the OAM according to the value of the member action of 5; determines that both an ingress port and an egress port bound with an OAM instance are the port A according to values of the member localPort of X and Y; determines that the transmission period of the OAM messages is 3.3 milliseconds according to data message analysis; finds a currently validated OAM instance according to the OAM identifier of 1, deletes the OAM instance (and at the same time deletes the 3.33-millisecond timer), that is, cancels sending and receiving of the OAM messages at the port A. The OAM component of the NE2 analyzes the structure of the OAM message, determines that the operation type is deletion of the OAM according to the value of the member action of 5; determines that both an ingress port and an egress port bound with an OAM instance are the port Z according to values of the member localPort of P and Q; determines that the transmission period of the OAM messages is 3.3 milliseconds according to data message analysis; finds a currently validated OAM instance according to the OAM identifier of 1, deletes the OAM instance (and at the same time deletes the 3.33-millisecond timer), and cancels sending and receiving of the OAM messages at the port Z.

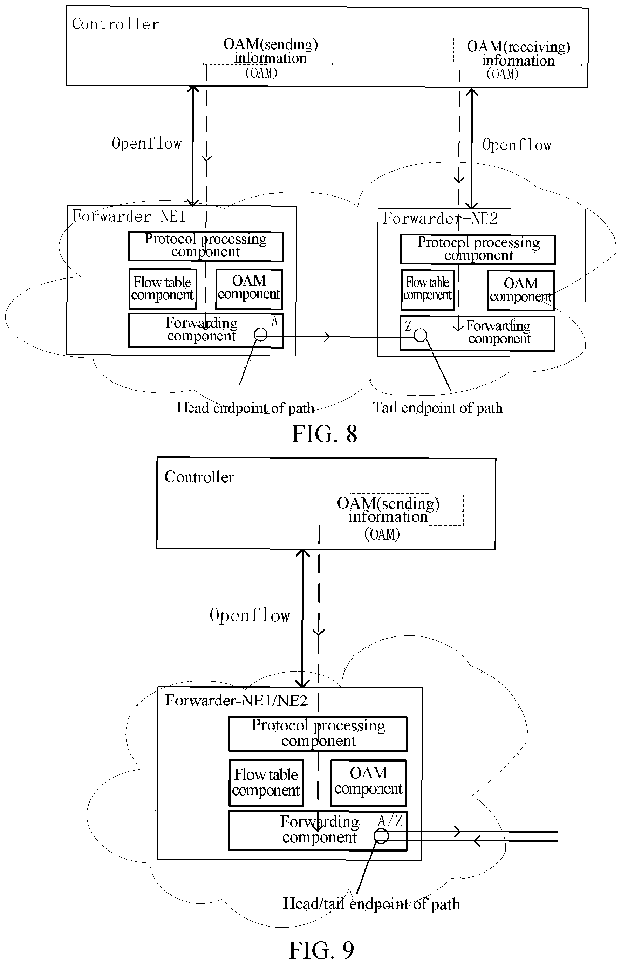

In some scenarios, the controller initiates OAM of addition, modification, pause, start, or deletion of the bidirectional path A-Z (from a port A of a Forwarder NE1 to a port A of a Forwarder NE2), but only NE1 or NE2 is assigned to the CMC for control, referring to FIG. 9. Thus the CMC only needs to interact with NE1 or NE2. In the above examples, each implementation step considers only a separate setting for NE1 or NE2, that is, each of the examples in such a scenario.

By way of example, the Controller initiates OAM functions of addition, modification, pause, start, or deletion of a unidirectional path A-Z (from a port A of a Forwarder NE1 to a port A of a Forwarder NE2), and the implementation scheme will be described below in conjunction with FIGs. 8, 10 and 11.

### Application Example 6

In this example, by way of example, a controller initiates a fast OAM function of newly adding a new unidirectional path A-Z (from a port A of a Forwarder NE1 to a port A of a Forwarder NE2,) with a transmission period of 10 milliseconds.

The implementation scheme includes the following steps.

In step 1, the CMC initiates a configuration of a fast OAM of newly adding a unidirectional path A-Z, constructs a first OAM configuration message, where a value of the message member id is 1; and sets the message member action to be 1, and identifies the operation type as addition. The message member localPort identifies binding port A as an egress port using group table information Y, and the data message carries a message period of 10 milliseconds and also other required information. The first OAM configuration message is sent to the NE1 through an Openflow channel. At the same time, a second OAM configuration message is constructed, and the message member localPort identifies binding port Z as an ingress port using flow table entry information P. Other OAM configuration information is the same as the first OAM configuration message, and the second OAM configuration message is sent to the NE2 through the Openflow channel.

In step 2, an Openflow protocol processing component of the NE1 receives an Openflow message, analyzes the type member in the protocol header, determines that the Openflow message is an OAM configuration message according to the type value of 240, and forwards the Openflow message to an OAM component. An Openflow protocol processing component of the NE2 receives an Openflow message, analyzes the type member in the protocol header, determines that the Openflow message is an OAM configuration message according to the type value of 240, and forwards the Openflow message to the OAM component.

In step 3, the OAM component of the NE1 analyzes the OAM configuration message, determines that the operation type is addition according to the value of the member action of 1; determines that an egress port bound with an OAM instance is the port A according to a value of the member localPort of Y; determines that the transmission period of the OAM messages is 10 milliseconds according to data message analysis; creates an OAM instance with the OAM ID of 1, constructs the required OAM messages, starts the 10-millisecond timer, and sends the OAM messages from the port A periodically. The OAM component of the NE2 analyzes the OAM configuration message, determines that the operation type is addition according to the value of the member action of 1; determines that an ingress port bound with an OAM instance is the port Z according to a value of the member localPort of P; determines that the transmission period of the OAM messages is 10 milliseconds according to data message analysis; creates an OAM instance with the OAM ID of 1, and detects and receives the same type of OAM messages at the port Z.

### Application Example 7

In this example, by way of example, a controller initiates modifying the OAM transmission period of a unidirectional path A-Z (from a port A of a Forwarder NE1 to a port A of a Forwarder NE2) from 10 milliseconds to 3.33 milliseconds.

The implementation scheme includes the following steps.

In step 1, the CMC initiates a fast OAM of modifying a unidirectional path A-Z, constructs a first OAM configuration message, where a value of the message member id is 1; and sets the message member action to be 2, and identifies the operation type as modification. The message member localPort identifies binding port A as an egress port using group table information Y, and the data message carries a message period of 3.33 milliseconds and also other required information. The first OAM configuration message is sent to the NE1 through an Openflow channel. At the same time, a second OAM configuration message is constructed, and the message member localPort identifies binding port Z as an ingress port using flow table entry information P. Other OAM configuration information is the same as the first OAM configuration message, and the second OAM configuration message is sent to the NE2 through the Openflow channel.

In step 2, an Openflow protocol processing component of the NE1 receives an Openflow message, analyzes the type member in the protocol header, determines that the Openflow message is an OAM configuration message according to the type value of 240, and forwards the Openflow message to an OAM component. An Openflow protocol processing component of the NE2 receives an Openflow message, analyzes the type member in the protocol header, determines that the Openflow message is an OAM configuration message according to the type value of 240, and forwards the Openflow message to the OAM component.

In step 3, the OAM component of the NE1 analyzes the OAM configuration message, determines that the operation type is modification according to the value of the member action of 2; determines that an egress port bound with an OAM instance is the port A according to a value of the member localPort of Y; determines that the transmission period of the OAM messages is 3.33 milliseconds according to data message analysis; finds a currently validated OAM instance according to the OAM identifier of 1, cancels the 10-millisecond timer, starts the 3.33-millisecond timer, and sends the OAM messages from the port A periodically. The OAM component of the NE2 analyzes the OAM configuration message, determines that the operation type is modification according to the value of the member action of 2; determines that an ingress port bound with an OAM instance is the port Z according to a value of the member localPort of P; determines that the transmission period of the OAM messages is 3.33 milliseconds according to data message analysis; finds a currently validated OAM instance according to the OAM identifier of 1, and receives and sends the OAM messages with the transmission period of 3.33 milliseconds from the port Z.

### Application Example 8

In this example, by way of example, a controller initiates an OAM of pausing a unidirectional path A-Z (from a port A of a Forwarder NE1 to a port A of a Forwarder NE2).

The implementation scheme includes the following steps.

In step 1, the controller initiates a fast OAM of pausing a unidirectional path A-Z, constructs a first OAM configuration message, where a value of the message member id is 1; and sets the message member action to be 3, and identifies the operation type as pause. The message member localPort identifies binding port A as an egress port using group table information Y, and the data message carries a message period of 3.33 milliseconds and also other required information. The first OAM configuration message is sent to the NE1 through an Openflow channel. At the same time, a second OAM configuration message is constructed, and the message member localPort identifies binding port Z as an ingress port using flow table entry information P. Other OAM configuration information is the same as the first OAM configuration message, and the second OAM configuration message is sent to the NE2 through the Openflow channel.

In step 2, an Openflow protocol processing component of the NE1 receives an Openflow message, analyzes the type member in the protocol header, determines that the Openflow message is an OAM configuration message according to the type value of 240, and forwards the Openflow message to an OAM component. An Openflow protocol processing component of the NE2 receives an Openflow message, analyzes the type member in the protocol header, determines that the Openflow message is an OAM configuration message according to the type value of 240, and forwards the Openflow message to the OAM component.

In step 3, the OAM component of the NE1 analyzes the OAM configuration message, determines that the operation type is pause according to the value of the member action of 3; determines that an egress port bound with an OAM instance is the port A according to a values of the member localPort of Y; determines that the transmission period of the OAM messages is 3.33 milliseconds according to data message analysis; finds a currently validated OAM instance according to the OAM identifier of 1, pauses the 3.3-millisecond timer, and pauses sending of the OAM messages from the port A. The OAM component of the NE2 analyzes the OAM configuration message, determines that the operation type is pause according to the value of the member action of 3; determines that an ingress port bound with an OAM instance is the port Z according to a value of the member localPort of P; determines that the transmission period of the OAM messages is 3.33 milliseconds according to data message analysis; finds a currently validated OAM instance according to the OAM identifier of 1, and pauses sending of the OAM messages with the transmission period of 3.33 milliseconds from the port Z.

### Application Example 9

In this example, by way of example, a controller initiates an OAM of starting the paused unidirectional path A-Z (from a port A of a Forwarder NE1 to a port A of a Forwarder NE2).

The implementation scheme includes the following steps.

In step 1, the controller initiates a fast OAM of restarting the paused unidirectional path A-Z, constructs a first OAM configuration message, where a value of the message member id is 1; and sets the message member action to be 4, and identifies the operation type as restart. The message member localPort identifies binding port A as an egress port using group table information Y, and the data message carries a message period of 3.33 milliseconds and also other required information. The first OAM configuration message is sent to the NE1 through an Openflow channel. At the same time, a second OAM configuration message is constructed, and the message member localPort identifies binding port Z as an ingress port using flow table entry information P. Other OAM configuration information is the same as the first OAM configuration message, and the second OAM configuration message is sent to the NE2 through the Openflow channel.

In step 2, an Openflow protocol processing component of the NE1 receives an Openflow message, analyzes the type member in the protocol header, determines that the Openflow message is an OAM configuration message according to the type value of 240, and forwards the Openflow message to an OAM component. An Openflow protocol processing component of the NE2 receives an Openflow message, analyzes the type member in the protocol header, determines that the Openflow message is an OAM configuration message according to the type value of 240, and forwards the Openflow message to the OAM component.

In step 3, the OAM component of the NE1 analyzes the OAM configuration message, determines that the operation type is restart according to the value of the member action of 4; determines that an egress port bound with an OAM instance is the port A according to a value of the member localPort of Y; determines that the transmission period of the OAM messages is 3.33 milliseconds according to data message analysis; finds a currently validated OAM instance according to the OAM identifier of 1, restarts the 3.33-millisecond timer, and begins to send the OAM messages from the port A. The OAM component of the NE2 analyzes the OAM configuration message, determines that the operation type is restart according to the value of the member action of 4; determines that an ingress port bound with an OAM instance is the port Z according to a value of the member localPort of P; determines that the transmission period of the OAM messages is 3.33 milliseconds according to data message analysis; finds a currently validated OAM instance according to the OAM identifier of 1, restarts the 3.33-millisecond timer, and begins to detect, receive and send the OAM messages with the transmission period of 3.33 milliseconds from the port Z.

### Application example 10

In this example, by way of example, a controller initiates an OAM of deleting a unidirectional path A-Z (from a port A of a Forwarder NE1 to a port A of a Forwarder NE2).

The implementation scheme includes the following steps.

In step 1, the controller initiates a fast OAM of restarting a unidirectional path A-Z, constructs a first OAM configuration message, where a value of the message member id is 1; and sets the message member action to be 5, and identifies the operation type as deletion. The message member localPort identifies binding port A as an egress port using group table information Y, and the data message carries a message period of 3.33 milliseconds and also other required information. The first OAM configuration message is sent to the NE1 through an Openflow channel. At the same time, a second OAM configuration message is constructed, and the message member localPort identifies binding port Z as an ingress port using flow table entry information P. Other OAM configuration information is the same as the first OAM configuration message, and the second OAM configuration message is sent to the NE2 through the Openflow channel.

In step 2, an Openflow protocol processing component of the NE1 receives an Openflow message, analyzes the type member in the protocol header, determines that the Openflow message is an OAM configuration message according to the type value of 240, and forwards the Openflow message to an OAM component. An Openflow protocol processing component of the NE2 receives an Openflow message, analyzes the type member in the protocol header, determines that the Openflow message is an OAM configuration message according to the type value of 240, and forwards the Openflow message to the OAM component.

In step 3, the OAM component of the NE1 analyzes the OAM configuration message, determines that the operation type is deletion according to the value of the member action of 5; determines that an egress port bound with an OAM instance is the port A according to a value of the member localPort of Y; determines that the transmission period of the OAM messages is 3.33 milliseconds according to data message analysis; finds a currently validated OAM instance according to the OAM identifier of 1, deletes the OAM instance (and at the same time deletes the 3.33-millisecond timer), and cancels sending of the OAM messages at the port A. The OAM component of the NE2 analyzes the OAM configuration message, determines that the operation type is deletion according to the value of the member action of 5; determines that an ingress port bound with an OAM instance is the port Z according to a value of the member localPort of P; determines that the transmission period of the OAM messages is 3.33 milliseconds according to data message analysis; finds a currently validated OAM instance according to the OAM identifier of 1, deletes the OAM instance (and at the same time deletes the 3.33-millisecond timer), and cancels receiving and sending of the OAM messages with the transmission period of 3.33 milliseconds at the port Z.

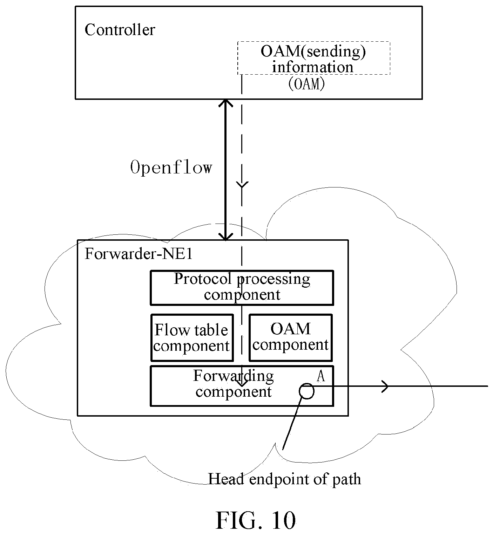

In other scenarios, the controller initiates OAM of addition, modification, pause, start, or deletion of the unidirectional path A-Z (from a port A of a Forwarder NE1 to a port A of a Forwarder NE2), but only NE1 is assigned to the CMC for control, as shown in FIG. 10. Thus the CMC only needs to interact with NE1. In the above embodiments, each implementation step considers only a setting for NE1, that is, the example in such a scenario.

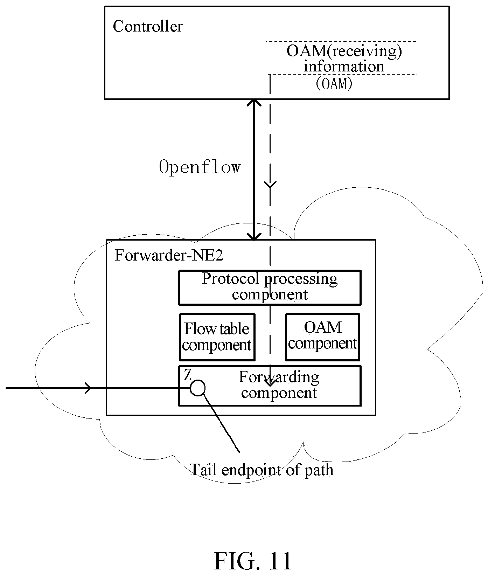

In other scenarios, the controller initiates OAM of addition, modification, pause, start, or deletion of the unidirectional path A-Z (from a port A of a Forwarder NE1 to a port A of a Forwarder NE2), but only NE2 is assigned to the CMC for control, as shown in FIG. 11. Thus the CMC only needs to interact with NE2. In the above embodiments, each implementation step considers only a setting for NE2, that is, the example in such a scenario.

It should be noted that, for the OAM of non-packet transmission technologies such as OTN exists inherently, addition, deletion and modification operations of the OAM are not required, only start or pause is required, to determine whether an OAM monitoring function is enabled. Start means enabling the OAM monitoring function and pause means disabling the OAM monitoring function.

The scheme described above extends the message types based on the interface between the controller and the forwarder of the existing SDN (not limited to SDN), and completes addition, modification, pause, start, deletion of a fast OAM of bidirectional or unidirectional path for networks such as Ethernet, IP, MPLS, MPLS-TP and PBB based on packet transmission technology, and OTN, WDM based on non-packet transmission technology, and has the advantages of simplicity and reliability.

Those skilled in the art can understand that all or parts of steps of the above-mentioned embodiments can be implemented using computer program processes. The computer program can be stored in one computer readable storage medium. The computer program is executed on the corresponding hardware platform (e.g., system, equipment, apparatus, device, etc), and when the computer program is executed, one or a combination of steps of the method embodiments is included.

Alternatively, all or parts of steps of the above-mentioned embodiments can also be implemented using integrated circuits, these steps can be fabricated into individual integrated circuit modules respectively, or multiple modules or steps thereof are fabricated into a single integrated circuit to implement.

Devices/functional modules/functional units in the embodiments described above can be implemented using a general-purpose computing device. They can be centralized on a single computing device, or distributed among a network which consists of multiple computing devices.

Devices/functional modules/functional units in the embodiments described above, when implemented in the form of software functional module and sold or used as separate products, can be stored in one computer readable storage medium. The above-mentioned computer readable storage medium can be read-only memory, disk or compact disc, etc.

### Industrial Applicability

In the embodiments of the present invention, through OAM configuration message, the OAM is configured at the head and tail endpoint forwarders of the forwarding path, so as to implement receiving and sending of the OAM messages at the forwarder as required by standards. In addition, by extending the message types of the Openflow protocol header, the newly defined OAM message completes configuration function such as addition, modification, pause, start or deletion of the OAM function, and has the advantages of simplicity and reliability.

## Claims

1. A method for configuring an operation, administration and maintenance, OAM, function, comprising:
a controller initiating a configuration of an OAM function of a forwarding path and constructing an OAM configuration message, wherein OAM configuration information is carried in the OAM configuration message;
the controller sending the OAM configuration message to a head endpoint forwarder and/or a tail endpoint forwarder of the forwarding path through an Openflow channel.

2. The method according to claim 1, wherein
a message type carried by an Openflow protocol header in the OAM configuration message is a new message type obtained by extending message types defined by an Openflow protocol.

3. The method according to claim 1 or 2, wherein
the OAM configuration information comprises all or part of the following information:
an OAM identifier indicating an identifier of an OAM instance configured;
an operation type indicating a type of an operation to be implemented;
a local port indicating a port bound with an OAM instance on a forwarder; and
a message transmission period indicating a period for sending OAM messages by the forwarder.

4. The method according to claim 3, wherein
the local port is a physical port or a logical port, comprising:
an ingress port representing a port through which OAM messages are received; and/or
an egress port representing a port through which OAM messages are sent.

5. The method according to claim 4, wherein
the forwarding path is a bidirectional forwarding path, and the controller constructing the OAM configuration message comprises:
constructing a first OAM configuration message which is to be sent to a head endpoint forwarder of the bidirectional forwarding path, wherein the first OAM configuration message carries information of a local port on the head endpoint forwarder, comprising ingress port information represented by flow table entry information and egress port information represented by group table information; and
constructing a second OAM configuration message which is to be sent to a tail endpoint forwarder of the bidirectional forwarding path, wherein the second OAM configuration message carries information of a local port on the tail endpoint forwarder, comprising ingress port information represented by flow table entry information and egress port information represented by group table information.

6. The method according to claim 4, wherein
the forwarding path is a unidirectional forwarding path, and the controller constructing the OAM configuration message comprises:
constructing a first OAM configuration message which is to be sent to a head endpoint forwarder of the unidirectional forwarding path, wherein the first OAM configuration message carries information of a local port on the head endpoint forwarder, comprising egress port information represented by group table information; and
constructing a second OAM configuration message which is to be sent to a tail endpoint forwarder of the unidirectional forwarding path, wherein the second OAM configuration message carries information of a local port on the tail endpoint forwarder, comprising ingress port information represented by flow table entry information.

7. The method according to claim 3, wherein
the operation type is one of the following: addition, modification, start, pause and deletion.

8. The method according to claim 1 or 2 or 4 or 5 or 6 or 7, wherein
a network protocol layer where the forwarding path is located is one of the following network protocol layers:
a physical layer, VLAN layer, IP layer and service layer of an Ethernet;
a tunnel layer, pseudo-wire layer and service layer of a multi-protocol label switching, MPLS, network or multi-protocol label switching-transport profile, MPLS-TP, network;
a physical layer, section layer and Optical Channel Data Unit-k, ODUk, layer of an optical transport network, OTN; and
a physical layer, optical transmission section layer, optical multiplex section layer, optical channel layer, and optical regeneration section layer of a wavelength division multiplexing, WDM, network.

9. A method for implementing an operation, administration and maintenance, OAM, function, comprising:
a forwarder at one end of a forwarding path receiving an Openflow message through an Openflow channel and analyzing an Openflow protocol header in the Openflow message; and
when determining that the Openflow message is an OAM configuration message according to an analysis result, the forwarder analyzing the OAM configuration message, acquiring OAM configuration information in the OAM configuration message and implementing corresponding processing.

10. The method according to claim 9, wherein
the forwarder analyzing the Openflow protocol header and determining that the Openflow message is an OAM configuration message comprises:
the forwarder analyzing the Openflow protocol header, and determining that the Openflow message is an OAM configuration message when it is determined that a message type carried in the Openflow protocol header is a message type of the OAM configuration message, wherein the message type of the OAM configuration message is a new message type obtained by extending message types defined by an Openflow protocol.

11. The method according to claim 9, wherein
the OAM configuration information acquired by the forwarder comprises all or part of the following information:
an OAM identifier indicating an identifier of an OAM instance configured;
an operation type indicating a type of an operation to be implemented;
a local port indicating a port bound with an OAM instance on a forwarder; and
a message transmission period indicating a period for sending OAM messages by the forwarder.

12. The method according to claim 11, wherein
the OAM configuration information acquired by the forwarder comprises information of a local port, the local port is a physical port or a logical port, comprising:
an ingress port representing a port through which OAM messages are received; and/or
an egress port representing a port through which OAM messages are sent.

13. The method according to claim 12, wherein
the forwarding path is a bidirectional forwarding path;
the information of a local port acquired by the forwarder comprises ingress port information represented by flow table entry information and egress port information represented by group table information; and
the forwarder implements corresponding processing, comprising: finding a local ingress port in matching according to the flow table entry information, and finding a local egress port in matching according to the group table information.

14. The method according to claim 12, wherein
the forwarding path is a unidirectional forwarding path;
the information of a local port acquired by the forwarder comprises ingress port information represented by flow table entry information or egress port information represented by group table information; and
the forwarder implements corresponding processing, comprising: finding a local ingress port in matching according to the flow table entry information, or finding a local egress port in matching according to the group table information.

15. The method according to claim 12 or 13 or 14, wherein
the operation type acquired by the forwarder is addition; the forwarder implements corresponding processing, comprising: creating an OAM instance having the OAM identifier and binding with a specified ingress port and/or egress port, receiving OAM messages at the ingress port and/or sending OAM messages at the egress port according to the message transmission period; or
the operation type acquired by the forwarder is modification; the forwarder implements corresponding processing, comprising: finding an OAM instance to be configured according to the OAM identifier, updating a configuration of the OAM instance according to received OAM configuration information, and sending and/or receiving OAM messages according to a new configuration; or
the operation type acquired by the forwarder is deletion; the forwarder implements corresponding processing, comprising: finding an OAM instance to be configured according to the OAM identifier, and deleting the OAM instance; or
the operation type acquired by the forwarder is pause; the forwarder performs corresponding processing, comprising: finding an OAM instance to be configured according to the OAM identifier, and stopping sending and/or receiving of OAM messages; or
the operation type acquired by the forwarder is restart; the forwarder implements corresponding processing, comprising: finding an OAM instance to be configured according to the OAM identifier, and restarting sending and/or receiving of OAM messages.

16. The method according to any one of claims 9 to 14, wherein
a network protocol layer where the forwarding path is located is one of the following network protocol layers:
a physical layer, VLAN layer, IP layer and service layer of an Ethernet;
a tunnel layer, pseudo-wire layer and service layer of a multi-protocol label switching, MPLS, network or multi-protocol label switching-transport profile, MPLS-TP, network;
a physical layer, section layer and Optical Channel Data Unit-k, ODUk, layer of an optical transport network, OTN; and
a physical layer, optical transmission section layer, optical multiplex section layer, optical channel layer, and optical regeneration section layer of a wavelength division multiplexing, WDM, network.

17. A controller for configuring an operation, administration and maintenance, OAM, function of a forwarding path, comprising:
a message construction module configured to construct an OAM configuration message when initiating a configuration of an OAM function of a forwarding path, wherein OAM configuration information is carried in the OAM configuration message; and
a message sending module configured to send the OAM configuration message to a head endpoint forwarder and/or a tail endpoint forwarder of the forwarding path through an Openflow channel.

18. The controller according to claim 17, wherein
a message type carried by an Openflow protocol header in the OAM configuration message constructed by the message construction module is a new message type obtained by extending message types defined by an Openflow protocol.

19. The controller according to claim 17 or 18, wherein
the OAM configuration information carried in the OAM configuration message constructed by the message construction module comprises all or part of the following information:
an OAM identifier indicating an identifier of an OAM instance configured;
an operation type indicating a type of an operation to be implemented;
a local port indicating a port bound with the OAM instance on a forwarder; and
a message transmission period indicating a period for sending OAM messages by the forwarder.

20. The controller according to claim 19, wherein
the local port carried in the OAM configuration message constructed by the message construction module is a physical port or a logical port, comprising:
an ingress port representing a port through which OAM messages are received; and/or
an egress port representing a port through which OAM messages are sent.

21. The controller according to claim 20, wherein
the forwarding path is a bidirectional forwarding path,
the message construction module is configured to:
construct a first OAM configuration message which is to be sent to a head endpoint forwarder of the bidirectional forwarding path, wherein the first OAM configuration message carries information of a local port on the head endpoint forwarder, comprising ingress port information represented by flow table entry information and egress port information represented by group table information; and
construct a second OAM configuration message which is to be sent to a tail endpoint forwarder of the bidirectional forwarding path, wherein the second OAM configuration message carries information of a local port on the tail endpoint forwarder, comprising ingress port information represented by flow table entry information and egress port information represented by group table information.

22. The controller according to claim 20, wherein
the forwarding path is a unidirectional forwarding path,
the message construction module is configured to:
construct a first OAM configuration message which is to be sent to a head endpoint forwarder of the unidirectional forwarding path, wherein the first OAM configuration message carries information of a local port on the head endpoint forwarder, comprising egress port information represented by group table information; and
construct a second OAM configuration message which is to be sent to a tail endpoint forwarder of the unidirectional forwarding path, wherein the second OAM configuration message carries information of a local port on the tail endpoint forwarder, comprising ingress port information represented by flow table entry information.

23. The controller according to claim 19, wherein
the operation type in the OAM configuration information carried in the OAM configuration message constructed by the message construction module is one of the following: addition, modification, start, pause and deletion.

24. The controller according to claim 17 or 18 or 20 or 21 or 22, wherein
the message construction module constructs the OAM configuration message when initiating the configuration of the OAM function of the forwarding path, wherein a network protocol layer where the forwarding path is located is one of the following network protocol layers:
a physical layer, VLAN layer, IP layer and service layer of an Ethernet;
a tunnel layer, pseudo-wire layer and service layer of a multi-protocol label switching, MPLS, network or multi-protocol label switching-transport profile, MPLS-TP, network;
a physical layer, section layer and Optical Channel Data Unit-k, ODUk, layer of an optical transport network, OTN; and
a physical layer, optical transmission section layer, optical multiplex section layer, optical channel layer, and optical regeneration section layer of a wavelength division multiplexing, WDM, network.

25. A forwarder for implementing an operation, administration and maintenance, OAM, function of a forwarding path, comprising:
an Openflow protocol processing component configured to receive an Openflow message sent by a controller through an Openflow channel, analyze an Openflow protocol header in the Openflow message, and when determining that the Openflow message is an OAM configuration message, forward the Openflow message to an OAM component for processing; and
the OAM component configured to analyze the OAM configuration message, acquire OAM configuration information in the OAM configuration message and implement corresponding processing.

26. The forwarder according to claim 25, wherein
the Openflow protocol processing component is configured to analyze the Openflow protocol header, and determine that the Openflow message is an OAM configuration message when it is determined that a message type carried in the Openflow protocol header is a message type of the OAM configuration message, wherein the message type of the OAM configuration message is a new message type obtained by extending message types defined by an Openflow protocol.

27. The forwarder according to claim 25, wherein
the OAM configuration information acquired by the OAM component comprises all or part of the following information:
an OAM identifier indicating an identifier of an OAM instance configured;
an operation type indicating a type of an operation to be implemented;
a local port indicating a port bound with an OAM instance on a forwarder; and
a message transmission period indicating a period for sending OAM messages by the forwarder.

28. The forwarder according to claim 27, wherein
the OAM configuration information acquired by the OAM component comprises information of a local port, the local port is a physical port or a logical port, comprising:
an ingress port representing a port through which OAM messages are received; and/or
an egress port representing a port through which OAM messages are sent.

29. The forwarder according to claim 28, wherein
the information of a local port in the OAM configuration information acquired by the OAM component comprises ingress port information represented by flow table entry information and egress port information represented by group table information; and
the OAM component is configured to find a local ingress port in matching according to the flow table entry information, and find a local egress port in matching according to the group table information.

30. The forwarder according to claim 28, wherein
the information of a local port in the OAM configuration information acquired by the OAM component comprises ingress port information represented by flow table entry information or egress port information represented by group table information; and
the OAM component is configured to find a local ingress port in matching according to the flow table entry information, or find a local egress port in matching according to the group table information.

31. The forwarder according to any one of claims 28, 29, 30, wherein
the operation type acquired by the OAM component is addition; the OAM component is configured to create an OAM instance having the OAM identifier and bind with a specified ingress port and/or egress port, receive OAM messages at the ingress port and/or sending OAM messages at the egress port according to the message transmission period; or
the operation type acquired by the OAM component is modification; the OAM component is configured to find an OAM instance to be configured according to the OAM identifier, update a corresponding configuration of the OAM instance according to received OAM configuration information, and send and/or receive OAM messages according to a new configuration; or
the operation type acquired by the OAM component is deletion; the OAM component is configured to find an OAM instance to be configured according to the OAM identifier, and delete the OAM instance; or
the operation type acquired by the OAM component is pause; the OAM component is configured to find an OAM instance to be configured according to the OAM identifier, and stop sending and/or receiving of OAM messages; or
the operation type acquired by the OAM component is restart; the OAM component is configured to find an OAM instance to be configured according to the OAM identifier, and restart sending and/or receiving of OAM messages.

32. The forwarder according to any one of claims 25 to 30, wherein
a network protocol layer where the forwarding path associated with the forwarder is located is one of the following network protocol layers:
a physical layer, VLAN layer, IP layer and service layer of an Ethernet;
a tunnel layer, pseudo-wire layer and service layer of a multi-protocol label switching, MPLS, network or multi-protocol label switching-transport profile, MPLS-TP, network;
a physical layer, section layer and Optical Channel Data Unit-k, ODUk, layer of an optical transport network, OTN; and
a physical layer, optical transmission section layer, optical multiplex section layer, optical channel layer, and optical regeneration section layer of a wavelength division multiplexing, WDM, network.

33. A computer readable storage medium in which computer-executable instructions are stored and used to execute the method according to any one of claims 1-16.
